(19) Europäisches Patentamt
European Patent Office
Office européen des brevets

(11) **EP 1 933 117 A2**

(12) **EUROPÄISCHE PATENTANMELDUNG**

(43) Veröffentlichungstag:
**18.06.2008 Patentblatt 2008/25**

(51) Int Cl.:
***G01F 23/284*** *(2006.01)*

(21) Anmeldenummer: 07121151.0

(22) Anmeldetag: **20.11.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **13.12.2006 US 874986 P**
           **13.12.2006 DE 102006058852**

(71) Anmelder: **VEGA Grieshaber KG**
   **77709 Wolfach (DE)**

(72) Erfinder:
• **Fehrenbach, Josef**
  **77716, Haslach (DE)**
• **Welle, Roland**
  **77709, Oberwolfach (DE)**
• **Griessbaum, Karl**
  **77796, Mühlenbach (DE)**

(74) Vertreter: **Kopf, Korbinian Paul**
   **Maiwald Patentanwalts GmbH**
   **Elisenhof**
   **Elisenstrasse 3**
   **80335 München (DE)**

(54) **Verfahren und Vorrichtung zur Korrektur nichtidealer Zwischenfrequenzsignale in einem FMCW-Radar**

(57) Bei Füllstandmessgeräten nach dem FMCW-Prinzip kann eine Nichtlinearität des Sensorsignals in Abhängigkeit von der Zeit zu Messungenauigkeiten führen. Gemäß einem Ausführungsbeispiel der vorliegenden Erfindung umfasst das Füllstandmessgerät nach dem FMCW-Prinzip eine Korrektureinheit zur rechnerischen Korrektur der Amplitudenwerte oder zur Berechnung von Abtastzeitpunkten der Amplitudenwerte auf Basis eines werksseitig bestimmten Referenz-Zusammenhangs. Auf diese Weise sind Zwischenfrequenzwerte identisch denen eines idealen Sensors ableitbar..

Fig. 1a

EP 1 933 117 A2

**Beschreibung**

Technisches Gebiet

Die vorliegende Erfindung betrifft die Füllstandmessung. Insbesondere betrifft die vorliegende Erfindung ein Füllstandmessgerät, das nach dem FMCW-Prinzip arbeitet, die Verwendung eines derartigen Füllstandmessgeräts zur Füllstandmessung sowie ein Verfahren zum Messen eines Füllstands mit einem solchen Füllstandmessgerät.

Hintergrund der Erfindung

Bei Füllstandmessgeräten oder Füllstandsensoren, die nach dem FMCW-Verfahren arbeiten, wird ein frequenzmoduliertes Signal unter Verwendung einer Sende-/Empfangseinheit in Richtung des zu vermessenden Mediums abgestrahlt, von diesem reflektiert und über die Sende-/Empfangseinheit des Füllstandmessgerätes wieder empfangen.

In Abhängigkeit von den geforderten Einsatzbedingungen kommen für die Verwendung innerhalb der Füllstandmesstechnik verschiedene Trägerwellen in Betracht. Von besonderer Bedeutung sind neben den akustischen Wellen alle Arten von elektromagnetischen Wellen, wobei insbesondere die Frequenzbereiche der optischen Wellen und der Radarwellen von technischer Relevanz sind.

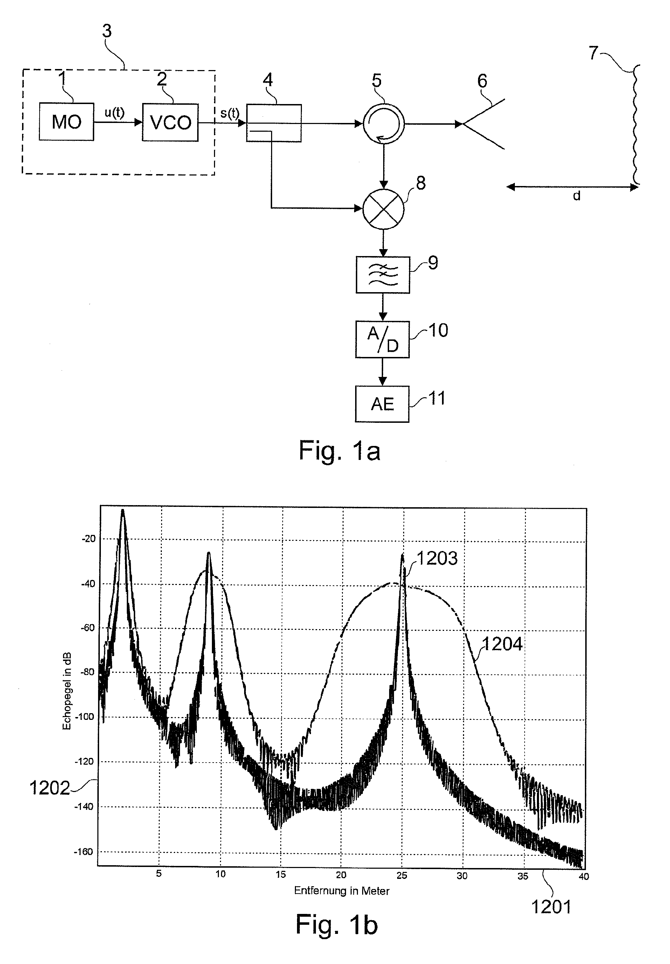

Fig. 1 zeigt die technische Realisierung eines Füllstandmessgerätes nach dem FMCW - Verfahren. Die Modulationseinrichtung 1 erzeugt ein im Idealfall linear über der Zeit ansteigendes Modulationssignal, das an einen spannungsgesteuerten Oszillator (VCO) 2 weitergeleitet wird. Am Ausgang des VCO 2 entsteht im idealisierten System ein linear frequenzmoduliertes Signal, das über eine Sende- / Empfangsweiche 5 an die Antenne 6 weitergeleitet und von dieser in Richtung des zu vermessenden Mediums 7 abgestrahlt wird. Das durch die Laufzeit zum Füllgut und zurück zum Sensor zeitlich verzögerte Empfangssignal wird in der Sende- / Empfangsweiche 5 vom Sendesignal getrennt und dem Mischer 8 zugeleitet. Innerhalb des Mischers 8 wird das Empfangssignal mit dem zum selben Zeitpunkt anliegenden Sendesignal gemischt und anschließend einer analogen Tiefpassfilterung 9 zugeführt, welche unerwünschte Signalanteile eliminiert. Auf diese Art entsteht ein Zwischenfrequenzsignal (ZF), dessen Frequenz proportional zum zu vermessenden Abstand zwischen Sensor und Füllgutoberfläche ist.

Zur genaueren Analyse des Zwischenfrequenzsignals wird dieses mit Hilfe eines Analog - Digital - Wandlers (A/D) digitalisiert und einem Mikroprozessorsystem ($\mu$P) zur weiteren Auswertung übergeben. Innerhalb des Mikroprozessorsystems ($\mu$P) verarbeiten spezialisierte Signalverarbeitungsalgorithmen den einlaufenden Datenstrom. Üblicherweise wird das digital eingelesene Zwischenfrequenzsignal (ZF) mit Hilfe der schnellen Fourier Transformation (FFT) in den Spektralbereich überführt, wo die exakte Bestimmung und Vermessung der von der Füllgutoberfläche verursachten Frequenzanteile durchgeführt werden kann. Der vom $\mu$P ermittelte Distanzwert kann über eine hier nicht dargestellte Kommunikationseinrichtung (KE), beispielsweise eine 4...20 mA Leitung, einer übergeordneten Steuerungseinrichtung oder Messwertanzeige zur Verfügung gestellt werden.

In real aufgebauten FMCW - Systemen lassen sich die idealisierten Verhältnisse allenfalls näherungsweise erreichen. Besondere Probleme bereitet in diesem Zusammenhang die Erzeugung eines Sendesignals, dessen Frequenz linear von der Zeit abhängen soll. Gemäß der in Fig. 1 dargestellten Anordnung haben sowohl die Modulationseinrichtung (MO), als auch der spannungsgesteuerte Oszillator (VCO) direkten Einfluss auf die Linearität des Sendesignals. Die Linearität der Modulationseinrichtung lässt sich durch vergleichsweise einfache technische Maßnahmen sicherstellen. Die Kennlinie des spannungsgesteuerten Oszillators (VCO), dessen Ausgangsfrequenz im allgemeinen keinen linearen Zusammenhang zur Ansteuerspannung aufweist, unterliegt demgegenüber verschiedensten Einflüssen, wobei insbesondere Serienstreuungen, Betriebstemperatur und Alterungseffekte zu berücksichtigen sind.

Die aufgrund dieser Nichtlinearität entstehenden Messfehler können sich negativ auf die Systemempfindlichkeit, die Messgenauigkeit und die Trennschärfe zwischen benachbarten Echos auswirken, wobei die jeweiligen Ungenauigkeiten mit größerer Entfernung zum zu vermessenden Füllstand stark zunehmen.

Um die oben genannten Nichtlinearitäten und die damit einhergehenden Messfehler zu kompensieren, kommen unterschiedliche Verfahren zum Einsatz.

In DE 19713967 wird eine Methode zur Korrektur der Nichtlinearität des spannungsgesteuerten Oszillators (VCO) beschrieben. Gemäß dem Verfahren wird die Ausgangsfrequenz des VCO in Abhängigkeit von der jeweils anliegenden Modulationsspannung während der eigentlichen Messung in einer geeigneten Auswerteeinheit ermittelt. Auf Basis dieser Kennlinie wird für den nachfolgenden Messzyklus ein von der linearen Funktion abweichender Verlauf der Modulationsspannung u ermittelt, der geeignet ist, die Nichtlinearität des VCO derart zu kompensieren, dass an dessen Ausgang ein idealer Frequenzverlauf über der Zeit entsteht.

Weiterhin sind aus der EP 1353194 Verfahren bekannt, die aus der Vermessung der Breite und der Amplitude eines im Messbereich liegenden Echos heraus eine Korrektur des Modulationsspannungsverlaufes vornehmen. Erfindungsgemäß wird das dazu verwendete Modulationssignal in Form eines Polynoms zweiten Grades beschrieben. Die Anpassung des Modulationssignalverlaufs erfolgt durch Veränderung der Koeffizienten dieses Polynoms.

Weitergehend werden für die Korrektur der Nichtlinearität Verfahren verwendet, die einen im Sensor integrierten Referenzzweig für das Signal vorsehen. In EP 0848829 wird vorgeschlagen, im Referenzzweig mit Hilfe eines SAW - Leitungselements ein definiertes Echo in einer vorab bekannten Entfernung zu erzeugen. Die im Referenzzweig erzeugte Zwischenfrequenz unterliegt den gleichen durch die Nichtlinearität des Frequenzsweeps verursachten Unzulänglichkeiten wie das im Messzweig erfasste Messsignal. Wird das Messsignal entsprechend dem Verfahren zu fest definierten Phasenwinkeln des Referenzsignals abgetastet, so eliminieren sich die durch die Nichtlinearität verursachten Fehler, womit die digitale Form des Messsignals identisch mit der eines idealisierten Systems wird.

Eine weitergehende Ausgestaltung einer Korrektureinrichtung kombiniert die zuvor genannten Verfahren. In WO 98/38525 wird aus dem durch eine Verzögerungseinrichtung erzeugten Referenzsignal mit Hilfe einer Detektoreinrichtung kontinuierlich die Periodendauer ermittelt, und mit der vorab bekannten Sollperiodendauer verglichen. Aus den sich ergebenden Abweichungen wird iterativ ein geeigneter Modulationsspannungsverlauf u(t) ermittelt, der wiederum dazu verwendet wird, den VCO anzusteuern. Im Zusammenspiel von Korrektureinrichtung, Modulator und VCO entsteht auf diese Weise am Ausgang des VCO ein Signal, wie es im idealisierten System zu erwarten wäre.

Die bislang vorgestellten Korrekturmethoden besitzen in verschiedenerlei Hinsicht Nachteile.

So verursachen Verfahren, die auf die Korrektur der Nichtlinearität des VCO durch Bereitstellung eines geeigneten, nichtlinearen Modulationssignals abzielen, entweder einen erhöhten Bauteileaufwand, falls die Erzeugung des Korrektursignals durch eine separate Hardwareeinheit realisiert wird, oder alternativ eine erhöhte Prozessorlast während dem eigentlichen Messvorgang. Im Hinblick auf die begrenzten Energieressourcen moderner Zweileitersensoren wirken sich die erhöhten Leistungsanforderungen besonders negativ aus, insbesondere während des Zeitraums der eigentlichen Messung, in dem ein Großteil der vorhandenen Energie für die Erzeugung der systembedingt notwendigen Trägerwelle verwendet werden muss.

Darüber hinaus sehen verschiedene Konzepte den Aufbau eines zweiten, ausschließlich für die interne Kalibrierung verwendeten Referenzzweiges vor. Innerhalb des Referenzzweiges wird durch ein vorab definiertes Verzögerungselement ein künstliches Echo erzeugt. Technisch werden die dabei geforderten Verzögerungszeiten üblicherweise durch den Einsatz integrierter SAW - Bauelemente erreicht. Nachteilig an diesen Konzepten ist neben dem zusätzlichen Schaltungsaufwand bei der Realisierung des Referenzzweiges insbesondere die starke Temperaturabhängigkeit des SAW - Bauelements, die ihrerseits wiederum durch Einsatz eines Temperatursensors korrigiert werden muss.

Weiterhin lässt sich die in EP 1353194 vorgeschlagene Vermessung der Breite und der Amplitude des Zwischenfrequenzspektrums wegen der Vielzahl zu erwartender Echos im Umfeld der Füllstandmessung nicht anwenden.

Darstellung der Erfindung

Es ist eine Aufgabe der vorliegenden Erfindung, eine verbesserte Korrektur nichtidealer Zwischenfrequenzsignale bereitzustellen.

Gemäß einem Ausführungsbeispiel der vorliegenden Erfindung ist ein Füllstandmessgerät angegeben, welches nach dem FMCW-Prinzip arbeitet, wobei das Füllstandmessgerät eine Speichereinheit zum Speichern eines während einer ersten Referenzphase des Füllstandsmessgeräts bestimmten ersten Referenz-Zusammenhangs zwischen einer vom Füllstandmessgerät abgestrahlten Frequenz und der Abstrahlzeit, einer Auswerteeinheit zum Bestimmen eines während einer Betriebsphase des Füllstandmessgeräts bestimmten Zusammenhangs zwischen Amplitudenwerten eines Zwischenfrequenz-Signals und der Abstrahlzeit, und eine Korrektureinheit zur rechnerischen Korrektur der Amplitudenwerte oder zur Berechnung von Abtastzeitpunkten der Amplitudenwerte auf Basis des ersten Referenz-Zusammenhangs aufweist.

In anderen Worten erfolgt die Abtastung des Zwischenfrequenz-Signals beispielsweise zu äquidistanten Zeitpunkten, wobei die während der Betriebsphase gemessene Messkurve des realen Sensors rechnerisch korrigiert wird. Oder aber die Abtastung erfolgt nicht zu äquidistanten Zeitpunkten, sondern zu vorab berechneten, angepassten Abtastzeitpunkten, so dass es im digitalen Bereich erscheint, dass die Abtastwerte konstant sind.

Die Korrektur des Messsignals oder der Abtastzeitpunkte erfolgt jeweils auf Basis eines beispielsweise werkseitig aufgenommenen Referenzsignals.

Gemäß einem weiteren Ausführungsbeispiel der vorliegenden Erfindung entsprechen die rechnerisch korrigierten Amplitudenwerte den theoretischen Amplitudenwerten eines idealen Füllstandmessgeräts.

Gemäß einem weiteren Ausführungsbeispiel der vorliegenden Erfindung umfasst die rechnerische Korrektur der Amplitudenwerte eine Interpolation. Beispielsweise umfasst die Korrekturvorschrift den im Speicher des Sensors abgelegten Zusammenhang zwischen abgestrahlter Frequenz und zugehöriger Zeit. Die im Speicher liegenden Zwischenfrequenzwerte entsprechen somit den von einem idealen Sensor erzeugten Signalamplituden.

Gemäß einem weiteren Ausführungsbeispiel der vorliegenden Erfindung werden die tatsächlich vorhandenen Amplitudenwerte zu äquidistanten Zeitpunkten bestimmt.

Es ist somit lediglich eine rechnerische Korrektur der Amplitudenwerte notwendig. Der Zeitstempel (d. h. die Abtastzeit) muss nicht angepasst werden.

Gemäß einem weiteren Ausführungsbeispiel der vorliegenden Erfindung umfasst die rechnerische Korrektur eine Zuordnung tatsächlich vorhandener Amplitudenwerte zu vorab definierten, vorgegebenen Abtastzeitpunkten.

Gemäß einem weiteren Ausführungsbeispiel der vorliegenden Erfindung werden benötigte, nicht vorhandene Abtastwerte der Amplitude mit Hilfe einer Interpolation gewonnen.

Gemäß einem weiteren Ausführungsbeispiel der vorliegenden Erfindung sind die berechneten Abtastzeitpunkte während einer Kalibrierungsphase vor der Betriebsphase in der Speichereinheit abgelegt.

Somit werden die tatsächlichen Abtastzeitpunkte beispielsweise werkseitig bestimmt, indem eine Testmessung vorgenommen und ausgewertet wird. Im Allgemeinen sind die berechneten Abtastzeitpunkte dann nicht mehr äquidistant verteilt.

Gemäß einem weiteren Ausführungsbeispiel der vorliegenden Erfindung werden die Amplitudenwerte zu den berechneten, nicht-äquidistanten Abtastzeitpunkten bestimmt, so dass sie den theoretischen Amplitudenwerten eines idealen Füllstandmessgeräts mit äquidistanter Abtastung entsprechen.

Die Abtastung des Messsignals erfolgt also nicht in äquidistanten Schritten, sondern zu korrigierten, berechneten Zeitpunkten, so dass ein nicht-linearer Zusammenhang zwischen Abstrahlzeit und Frequenz ausgeglichen wird.

Gemäß einem weiteren Ausführungsbeispiel der vorliegenden Erfindung weist die Auswerteeinheit einen Analog-Digital-Wandler zum Abtasten der Amplitudenwerte des Zwischenfrequenz-Signals auf.

Weiterhin ist, gemäß einem Ausführungsbeispiel der vorliegenden Erfindung, der erste Referenz-Zusammenhang werkseitig durch Vermessung der abgestrahlten Frequenz bestimmt.

Somit ist der Sensor bereits nach Auslieferung voll einsatzfähig. Ein extra durchzuführender Kalibrierungsschritt ist nicht erforderlich.

Gemäß einem weiteren Ausführungsbeispiel der vorliegenden Erfindung weist das Füllstandmessgerät eine Auswerteeinheit zur Auswertung eines Zwischenfrequenzspektrums auf, wobei die Auswertung des Zwischenfrequenzspektrums eine Überführung des Zwischenfrequenz-Signals in den Frequenzbereich unter Verwendung einer schnellen Fourier-Transformation beinhaltet.

Weiterhin ist, gemäß einem Ausführungsbeispiel der vorliegenden Erfindung, die Auswerteeinheit zum Bestimmen eines zweiten Referenz-Zusammenhangs zwischen der vom Füllstandmessgerät abgestrahlten Frequenz und der Abstrahlzeit während einer zweiten Referenzphase des Füllstandmessgeräts ausgeführt, wobei der zweite Referenz-Zusammenhang den ersten Referenz-Zusammenhang im Speicher ersetzt.

Auf diese Weise kann der Sensor z.B. im Feldbetrieb nachkalibriert werden.

Gemäß einem weiteren Ausführungsbeispiel der vorliegenden Erfindung werden der erste Referenz-Zusammenhang und der zweite Referenz-Zusammenhang in einem zeitlich vorbestimmten Abstand voneinander bestimmt.

Auf diese Weise kann die Sendecharakteristik zu festgelegten Kalibrierungszeitpunkten regelmäßig aktualisiert werden.

Gemäß einem weiteren Ausführungsbeispiel der vorliegenden Erfindung wird der zweite Referenz-Zusammenhang bei Eintritt eines bestimmten Ereignisses bestimmt. Demgemäß erfolgt die Nachkalibrierung des Sensors in Abhängigkeit von äußeren oder inneren Einflussfaktoren und ist damit zeitlich variabel bei Bedarf.

Gemäß einem weiteren Ausführungsbeispiel der vorliegenden Erfindung ist die Speichereinheit zum Speichern eines dritten Referenz-Zusammenhangs zwischen einer vom Füllstandmessgerät abgestrahlten Frequenz und einer Temperatur ausgeführt.

Weiterhin kann ein Temperaturfühler zum Messen einer zum Sendezeitpunkt vorherrschenden Temperatur eines Oszillators des Füllstandmessgeräts vorgesehen sein, wobei die rechnerische Korrektur oder die Berechnung der Abtastzeitpunkte der Amplitudenwerte auf Basis der vorherrschenden Temperatur des Oszillators und des dritten Referenz-Zusammenhangs erfolgt.

In anderen Worten wird im Sensor während der Herstellung im Werk zusätzlich der Einfluss der Temperatur auf die abgestrahlten Sendefrequenzen gespeichert. Unter Verwendung eines zusätzlich sensorintegrierten Fühlers kann die zum Sendezeitpunkt vorherrschende Temperatur des spannungsgesteuerten Oszillators erfasst und bei der nachfolgend durchzuführenden rechnerischen Korrektur der aufgezeichneten Signale durch Selektion des zur jeweiligen Temperatur gehörenden, im Speicher abgelegten Verlaufs der Sendefrequenz über der Zeit berücksichtigt werden.

Gemäß einem weiteren Ausführungsbeispiel der vorliegenden Erfindung ist das Füllstandmessgerät als Füllstandradarsystem ausgeführt.

Gemäß einem weiteren Ausführungsbeispiel der vorliegenden Erfindung ist die Verwendung eines Füllstandmessgeräts zur Füllstandmessung angegeben.

Weiterhin ist ein Verfahren zum Messen eines Füllstands mit einem Füllstandmessgerät angegeben, bei welchem ein während einer ersten Referenzphase des Füllstandmessgeräts bestimmter erster Referenz-Zusammenhang zwischen einer vom Füllstandmessgerät abgestrahlten Frequenz und der Abstrahlzeit bestimmt wird, ein während einer Betriebsphase des Füllstandmessgeräts bestimmter Zusammenhang zwischen Amplitudenwerten eines Zwischenfrequenz-Signals und der Abstrahlzeit bestimmt wird, und eine rechnerische Korrektur der Amplitudenwerte des Zwischenfrequenz-Signals oder eine Berechnung von Abtastzeitpunkten der Amplitudenwerte des Zwischenfrequenz-Signals auf Basis des ersten Referenz-Zusammenhangs durchgeführt wird.

Vorteilhafte Weiterbildungen des Verfahrens ergeben sich aus den Unteransprüchen.

Bei dem erfindungsgemäßen Sensor wird vorzugsweise bereits während der Herstellung im Werk eine Vermessung der abgestrahlten Frequenz über der Zeit vorgenommen und der Zusammenhang in geeigneter Form in einer Speichereinheit des Sensors abgelegt. Während der Betriebsphase des Sensors wird das durch den Mischer entstehende Zwischenfrequenz-Signal mit Hilfe eines A/D-Wandlers zu äquidistanten Zeitpunkten abgetastet und in einem geeigneten Speicher abgelegt. Nach Abschluss des Einlesevorgangs wird mit Hilfe eines erfindungsgemäßen Verfahrens eine rechnerische Korrektur der abgelegten Amplitudenwerte durchgeführt, wobei die Korrekturvorschrift den ebenfalls im Speicher des Sensors abgelegten Zusammenhang zwischen abgestrahlter Frequenz und zugehöriger Zeit verwendet. Die nach Abschluss der rechnerischen Korrektur im Speicher liegenden Zwischenfrequenzwerte sind identisch den von einem idealen Sensor erzeugten Signalamplituden. Die nachfolgende Auswertung des Zwischenfrequenzspektrums erfolgt durch Algorithmen, wobei üblicherweise eine Überführung des Zeitsignals in den Frequenzbereich unter Verwendung einer sog. Fast Fourier Transformation (FFT) durchgeführt wird. Für die nachfolgende Extraktion von Echos und die Identifikation des zum Füllstand gehörenden Echos können verschiedene Verfahren eingesetzt werden, wobei an dieser Stelle insbesondere auch Verfahren zum Einsatz kommen können, die beispielsweise für die Verwendung innerhalb eines Impuls-Abstand-Messgeräts entwickelt worden sind.

Bei einer alternativen Ausgestaltung des erfindungsgemäßen Sensors wird eine weitere Verbesserung des Verfahrens durch eine dynamische zeitliche Nachführung des im Speicher abgelegten Zusammenhangs zwischen abgestrahlter Frequenz und der zugehörigen Zeit erreicht. Die Aktualisierung der Sendecharakteristik kann dabei zu festgelegten, zeitlich äquidistant liegenden Kalibrierungszeitpunkten durchgeführt werden. Alternativ ist es auch möglich, die Nachkalibrierung des Sensors von äußeren oder inneren Einflussfaktoren abhängig und damit zeitlich variabel durchzuführen.

Es wird also ein Verfahren und ein Füllstandmessgerät zur Verfügung gestellt, welche eine verbesserte Korrektur der Nichtlinearität in FMCW Abstandmessgeräten bereitstellen. Darüber hinaus betrifft die vorliegende Erfindung eine Methode zur Verarbeitung von Zwischenfrequenzsignalen, wie sie durch einen beliebigen, monoton ansteigenden oder monoton abfallenden Verlauf der Frequenz des abgestrahlten Signals über der Zeit entstehen können.

Im Folgenden werden mit Verweis auf die Figuren bevorzugte Ausführungsbeispiele der vorliegenden Erfindung beschrieben.

Kurze Beschreibung der Zeichnungen

Fig. 1a zeigt eine Prinzipdarstellung eines Entfernungsmessgerätes oder Füllstandradars nach dem FMCW-Verfahren.

Fig. 1b zeigt die Auswirkung eines nichtlinearen Frequenzsweeps.

Fig. 2 zeigt geeignete Modulationssignale eines FMCW - Messgerätes gemäß einem Ausführungsbeispiel der vorliegenden Erfindung.

Fig. 3 zeigt eine Frequenzkennlinie idealer und realer spannungsgesteuerter Oszillatoren.

Fig. 4 zeigt einen idealen und einen realen Verlauf der abgestrahlten Frequenz eines FMCW Messgerätes über der Zeit.

Fig. 5 zeigt ein FMCW - Messgerät und eine Kalibriereinrichtung gemäß einem Ausführungsbeispiel der vorliegenden Erfindung.

Figs. 6a, 6b, 6c zeigen Verfahrensschritte zur Ermittlung der Frequenzkennlinie bei der Kalibrierung eines FMCW - Messgerätes gemäß einem Ausführungsbeispiel der vorliegenden Erfindung.

Fig. 7 zeigt eine Ermittlung der modifizierten Zeitstempelwerte gemäß einem Ausführungsbeispiel der vorliegenden Erfindung.

Fig. 8 zeigt eine Vorrichtung mit nichtsynchroner Ansteuerung des Analog - Digital - Wandlers gemäß einem Ausführungsbeispiel der vorliegenden Erfindung.

Fig. 9 zeigt die Zuordnung modifizierter Amplitudenwerte gemäß einem Ausführungsbeispiel der vorliegenden Erfindung.

Fig. 10 zeigt einen modifizierter Sensor und eine zugehörige Kalibriereinrichtung bei Berücksichtigung der Temperatur gemäß einem Ausführungsbeispiel der vorliegenden Erfindung.

Fig. 11 zeigt einen Sensor mit Nachkalibriereinrichtung gemäß einem Ausführungsbeispiel der vorliegenden Erfindung.

Detaillierte Beschreibung von exemplarischen Ausführungsformen

Die Darstellungen in den Figuren sind schematisch und nicht maßstäblich.

In der folgenden Figurenbeschreibung werden für die gleichen oder ähnlichen Elemente die gleichen Bezugsziffern verwendet.

Fig. 1a zeigt ein Blockschaltbild einer Vorrichtung zur Füllstandmessung nach dem FMCW - Verfahren dargestellt. Der beispielhafte Aufbau eines Mikrowellensystems enthält eine Modulationseinrichtung 1, die einen spannungsgesteuerten Oszillator 2, hier einen Mikrowellenoszillator, ansteuert. Der Oszillator erzeugt abhängig von der Modulationsspannung an seinem Ausgang ein hochfrequentes, frequenzmoduliertes Sendesignal, das über eine Sende-/Empfangsweiche 5 und über eine Antenne 6 in Richtung des zu messenden Füllguts 7 abgestrahlt und von diesem reflektiert wird. Die reflektierten Signalanteile werden über die Antenne 6 wieder empfangen und von der Sende-/Empfangsweiche 5 an einen Hochfrequenzmischer 8 weitergeleitet. Im Hochfrequenzmischer wird das empfangene Signal mit einem Teil des zeitgleich anliegenden Sendesignals, der mit Hilfe einer Koppeleinrichtung 4 aus dem Sendesignalpfad abgezweigt wird, umgesetzt. Die dabei entstehenden Mischersignale werden einer Tiefpassfiltereinrichtung 9 zugeführt, die dafür zuständig ist, unerwünschte Signalanteile zu eliminieren. Das am Ausgang des Tiefpassfilters anliegende Zwischenfrequenzsignal (ZF) wird mit Hilfe eines Analog - Digital - Umsetzers 10 abgetastet und einer Auswerteeinheit 11 zur weiteren Verarbeitung übergeben.

Fig. 1b zeigt eine schematische Darstellung der Auswirkungen eines nichtlinearen Frequenzsweeps ohne Einsatz der vorliegenden Erfindung. Die horizontale Achse 1201 entspricht der Entfernung des Füllgutes in Metern (von 0m bis 40m), die vertikale Achse 1202 entspricht dem Echopegel in dB (von etwa -160dB bis -10 dB).

Die Kurve 1203 entspricht dem idealen Spektrum, die Kurve 1204 dem durch die Nichtlinearität gestörten Spektrum. Der Simulation liegt ein FMCW-Radarsystem mit einem Frequenzsweep zwischen 23.5 GHz und 24.5 GHz zu Grunde, dessen Sweepverlauf bei 24 GHz eine Abweichung von 61 MHz von der Ideallinie aufweist. Bei noch stärkeren Abweichungen werden die Ortsauflösung und die Dynamik des Echobildes immer mehr gestört. Eine exakte Vermessung von Echos wird dann nahezu unmöglich.

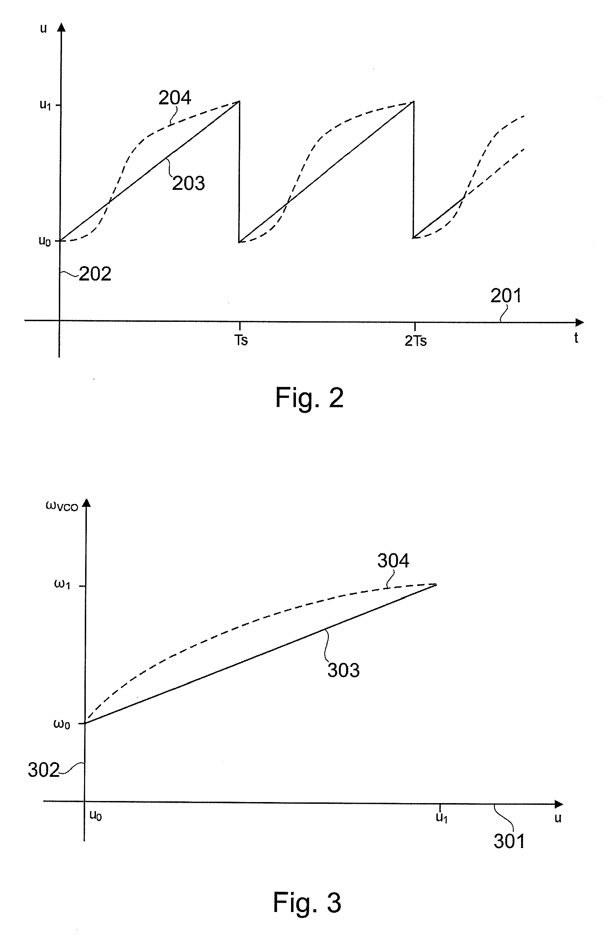

Fig. 2 zeigt ein Beispiel für den Verlauf der Modulationsspannung u(t), wie sie beispielsweise durch das Laden eines Kondensators mit Hilfe einer Konstantstromquelle erzeugt werden kann (durchgezogene Linie 203). Die horizontale Achse 201 zeigt die Zeit t. Die vertikale Achse 202 zeigt die Modulationsspannung u(t).

Die sägezahnförmige Modulationsspannung 203 zeigt hier während der Modulationsperiode einen absolut linear ansteigenden Verlauf. Bei korrekter Anwendung des erfindungsgemäßen Verfahrens sind aber auch andere Modulationssignalverläufe möglich. Verfahrensbedingt ist lediglich die strengen Monotonie der abgestrahlten Frequenz über der Zeit sicherzustellen. Unter der im Allgemeinen gültigen Annahme der strengen Monotonie der Kennlinie 303 des im System enthaltenen, spannungsgesteuerten Oszillators (VCO) muss für die Modulationsspannung 203 lediglich die strenge Monotonie des Spannungsverlaufs über der Zeit innerhalb eines Messzyklus und ein resultierender Spannungsverlauf ungleich dem inversen Verlauf der Kennlinie des VCO als Einschränkung vorausgesetzt werden. Die punktiert dargestellte Linie 204 in Fig. 2 zeigt das Beispiel eines frei gewählten, aber dennoch nach dem erfindungsgemäßen Verfahren geeigneten Modulationssignals.

Das von der Modulationseinrichtung erzeugte Signal u(t) wird im folgenden für die Ansteuerung des spannungsgesteuerten Oszillators verwendet.

Fig. 3 zeigt die Kennlinie 303 eines ideal ausgebildeten VCO, die im direkten linearen Zusammenhang zu der Ansteuerspannung steht. Die horizontale Achse 301 gibt die Spannung wieder. Die vertikale Achse 302 entspricht der Kreisfrequenz.

Real aufgebaute spannungsgesteuerte Oszillatoren weichen in Abhängigkeit vom internen Aufbau und den äußeren Einflüssen (wie zum Beispiel Temperaturschwankungen) mitunter stark von der linearen Kennlinie des idealisierten Bauelements ab. Die punktiert dargestellte Linie 304 in Fig. 3 zeigt den typischen Verlauf der Kennlinie eines realen Bauelements, wobei zu beachten ist, dass sich die dargestellte Kurve in Abhängigkeit von der Betriebstemperatur und dem Alter des VCO zusätzlich verändern kann.

Im folgenden werden der Modulator und der VCO zu einer einzigen Einheit zusammengefasst. Das von der Signalquelle 3 in Fig. 1 erzeugte Sendesignal wird durch die Verkettung der Kennlinien in Fig. 2 und Fig. 3 gebildet. Die Kennlinie der Sendeeinrichtung des idealisierten Sensors ergibt sich aus der Verknüpfung des linear ansteigenden Modulationssignals aus Fig. 2 mit der linearen Kennlinie aus Fig. 3.

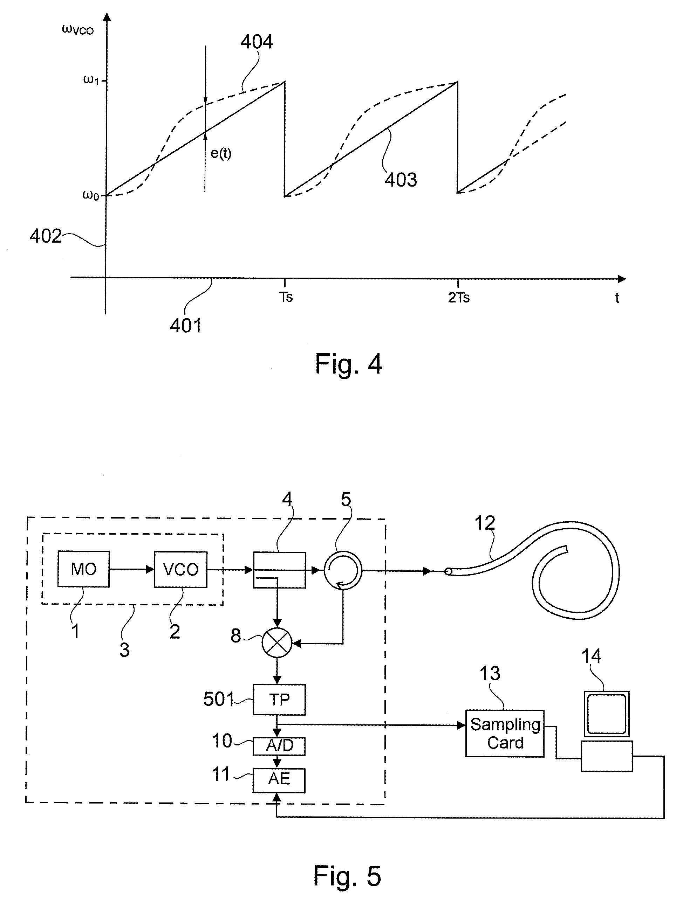

Fig. 4 zeigt den resultierenden Verlauf der Sendefrequenz über der Zeit. Innerhalb des Grundintervalls kann der Frequenzverlauf beschrieben werden durch:

$$\omega_{ideal}(t) = \mu \cdot t + \omega_0$$

wobei $\mu$ die Sweeprate des idealen Sensors bezeichnet, die von der Sweepzeit $T_S$, der Sendefrequenz $f_0$ zu Beginn eines Sweeps und der Sendefrequenz $f_1$ am Ende eines Sweeps gemäß dem folgenden Zusammenhang abhängt:

$$\mu = 2\pi \cdot \frac{f_1 - f_0}{T_S}$$

Fig. 4 zeigt in gepunkteter Linie 404 ein Beispiel für den Verlauf der resultierenden Sendefrequenz eines real aufgebauten FMCW - Systems über der Zeit. Die horizontale Achse 401 entspricht der Sweepzeit t, die vertikale Achse 402 der Kreisfrequenz.

Die Abweichungen der Sendefrequenz vom idealen Verlauf 403 entstehen einerseits durch Abweichungen vom linearen Verlauf bei der Erzeugung des Ansteuersignals im Modulator (vgl. nichtideale Ansteuerfunktion in Fig. 2), andererseits durch die nichtlineare Kennlinie eines real aufgebauten spannungsgesteuerten Oszillators (Fig. 3). Mathematisch lässt sich der Verlauf der Sendefrequenz des realen FMCW - Systems durch Definition einer Fehlerfunktion e(t) aus dem Verlauf der Sendefrequenz des idealen Systems ableiten. Es gilt nachfolgender Zusammenhang, wobei die Fehlerfunktion e(t) im allgemeinen nicht bekannt ist:

$$\omega_{real}(t) = \omega_{ideal}(t) + e(t)$$

Nachfolgende Ausführungen bezüglich der Anwendung eines erfindungsgemäßen Sensors beziehen sich auf eine Meßstelle mit einem einzelnen Reflektor. Grundsätzlich lassen sich die beschriebenen Zusammenhänge aber auch auf Systeme mit mehreren Reflexionsstellen übertragen.

Das nichtideale Sendesignal 404 wird über die Antenne in Richtung des zu vermessenden Mediums abgestrahlt und von diesem zum Sensor zurückreflektiert. Die dazu benötigte Signallaufzeit $\tau$ ergibt sich aus der Ausbreitungsgeschwindigkeit c der Trägerwelle und dem zu vermessenden Abstand a durch:

$$\tau = \frac{2a}{c}$$

Das verzögerte Signal wird im Sensor mit Hilfe eines Mischers umgesetzt. Nach der Tiefpassfilterung ergibt sich ein von der Verzögerungszeit $\tau$ abhängiges Zwischenfrequenzsignal, dessen Amplitudenverlauf sich näherungsweise beschreiben lässt:

$$s_{ZF}(t) = A \cdot \cos\left( \mu\tau t + \left( \omega_0\tau - \frac{1}{2}\mu\tau^2 \right) + \tau \cdot e(t) \right)$$

A kennzeichnet die von den Anwendungsbedingungen und dem Sensoraufbau abhängige Maximalamplitude des Zwischenfrequenzsignals.

Bei dem erfindungsgemäßen Sensor wird der Verlauf der abgestrahlten Frequenz über der Zeit im Rahmen einer Kalibrierung bereits im Werk erfasst. Dazu wird zunächst eine Messanordnung gemäß Fig. 5 verwendet. Während der Kalibrierung wird die Antenne des Sensors vorzugsweise durch eine möglichst lang zu wählende Koaxialleitung 12 ersetzt, die an ihrem Ende einen Kurzschluss aufweist. Das von der Sendeeinrichtung erzeugte Signal durchläuft die Koaxialleitung 12, wird an ihrem Ende reflektiert und im Sensor mit Hilfe der Mischerdiode 8 umgesetzt. Ein nachfolgend angeordnetes Tiefpassfilter 501 entfernt unerwünschte Mischungsanteile. Die entstehende Zwischenfrequenz beinhaltet aufgrund der großen Signalverzögerungszeiten innerhalb der Koaxialleitung 12 im wesentlichen nur höhere Frequenzen, die mit Hilfe einer dem Stand der Technik entsprechenden Samplingcard 13 digitalisiert und einem handelsüblichen PC-System 14 zur Verfügung gestellt werden.

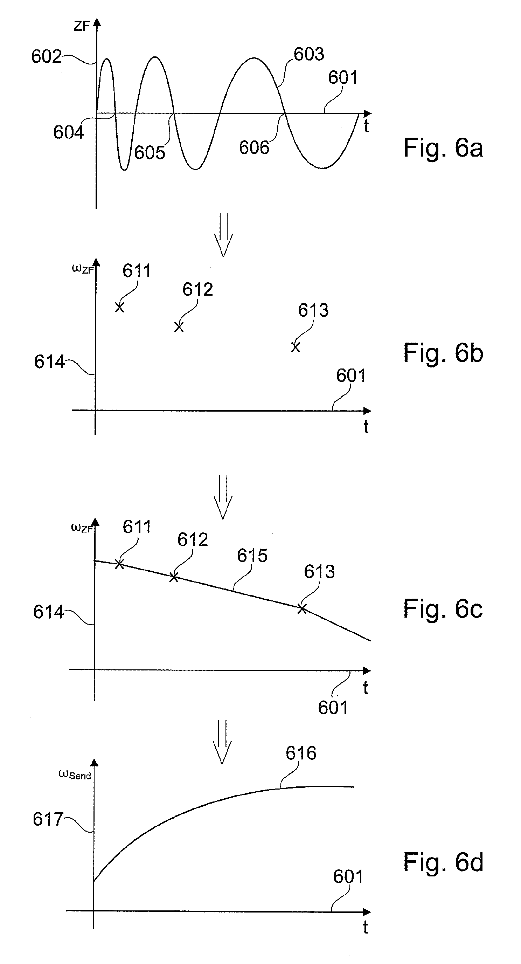

Innerhalb des PC-Systems 14 werden die Nulldurchgangszeitpunkte 604, 605, 606 (siehe Fig. 6a) des Zwischenfrequenzsignals 603 erfasst und die sich daraus ergebende Kreisfrequenzwerte 611, 612, 613 ermittelt, die anschließend den Zeitpunkten zwischen den jeweils benachbarten Nulldurchgangszeitpunkten 604, 605, 606 zugeordnet werden (siehe Figs. 6a, 6b). Die horizontalen Achsen 601 entsprechen der Zeit, die vertikale Achse 602 entspricht der Amplitude des ZF Signals (siehe Fig. 6a), die vertikalen Achsen 614 der Zwischenfrequenz (siehe Figs. 6b, 6c), und die vertikale Achse 617 der gesendeten Frequenz (siehe Fig. 6d).

Mit Hilfe numerischer Approximationsverfahren, beispielsweise einer Least Squares Approximation, werden im Rechner auf Basis der gemessenen Punkte hinreichend viele Zwischenpunkte berechnet (vgl. Kurve 615 der Fig. 6c). Anschließend wird der fein aufgelöste Verlauf der Kreisfrequenz über der Zeit numerisch integriert, und durch die aus der Länge der Koaxialleitung berechenbare Signalverzögerungszeit

$$\tau = \frac{2 \cdot l_{Koaxleitung}}{c}$$

dividiert. Dem Integrationsergebnis wird abschließend die aus einer stationären Messung ermittelte Startkreisfrequenz $\omega_0$ addiert, woraus man den Verlauf der gesendeten Frequenz über der Zeit erhält (vgl. Kurve 616 der Fig. 6d). Der ermittelte Frequenzverlauf wird vom PC in der Auswerteeinheit des Sensors abgelegt.

Während der eigentlichen Betriebsphase des Sensors wird in der ersten Phase ein gegenüber dem Stand der Technik unveränderter Ablauf durchlaufen. Das von der Signalquelle erzeugte Signal wird über die Antenne abgestrahlt, vom zu messenden Medium reflektiert, im Sensor unter Verwendung des zum aktuellen Zeitpunkt erzeugten Sendesignals gemischt und mit Hilfe eines Analog - Digital - Konverters einer Auswerteeinheit zur Verfügung gestellt. Innerhalb der Auswerteeinheit werden in einem weiteren Schritt die abgelegten Amplitudenwerte mit einem zugehörigen Zeitstempel, der den zum jeweiligen Abtastwert gehörenden Abtastzeitpunkt beschreibt, versehen.

Gemäß einer ersten Ausgestaltungsvariante der Erfindung werden in einem der Frequenzanalyse vorgelagerten, erfindungsgemäßen Auswerteschritt die Zeitstempel der abgelegten Amplitudenwerte verändert.

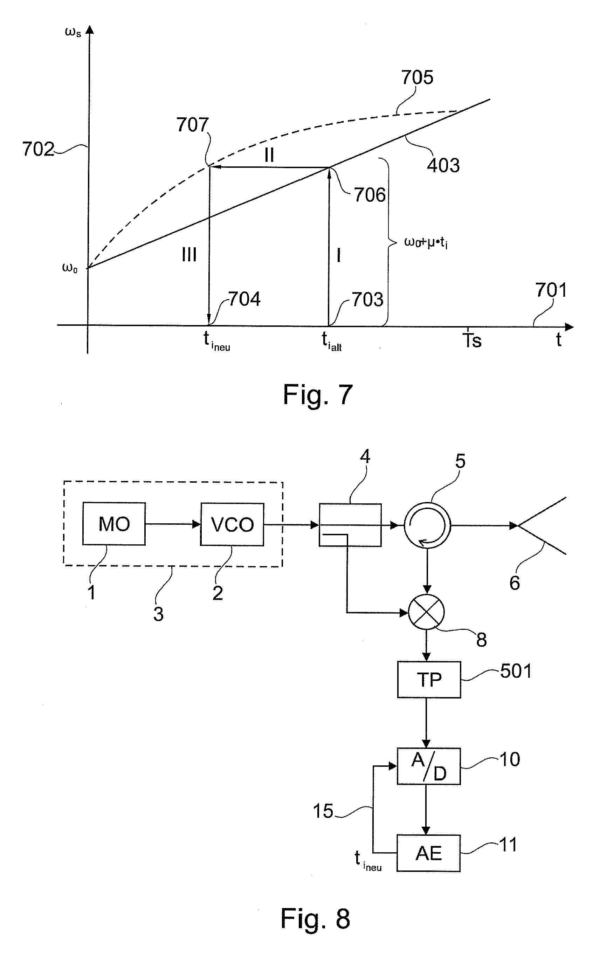

Fig. 7 verdeutlicht das Verfahren zur Veränderung der Zeitstempel, das für jeden abgelegten Wert durchlaufen werden muss. Die horizontale Achse 701 entspricht der Zeit, die vertikale Achse 702 entspricht der Frequenz des Signals.

Ausgehend vom aktuell eingetragenen Zeitstempelwert $t_{i,alt}$ 703 wird die zu diesem Zeitpunkt gehörende, von einer ideal linear arbeitenden Signalquelle erzeugte Sendefrequenz nach folgender Gleichung errechnet:

$$\omega_{ideal}(t) = \omega_0 + \mu \cdot t$$

Aufbauend auf dem ermittelten idealen Frequenzwert 706 wird nun derjenige Zeitpunkt $t_{i,neu}$ 704 gesucht, zu dem die vom Gerät erzeugte, real gesendete Frequenz 705 exakt diesen Wert 707 eingenommen hatte. Grundlage dieser Ermittlung ist der im Speicher abgelegte Verlauf der tatsächlich gesendeten Frequenz 705. Der Zeitstempeleintrag $t_{i,alt}$ 703 des aktuellen Amplitudenwertes wird nun durch den ermittelten Zeitpunkt $t_{i,neu}$ 704 ersetzt.

Nach Abschluss der Zeitstempelkorrektur liegen im allgemeinen zeitlich nicht mehr äquidistant verteilte Abtastwerte des Zwischenfrequenzsignals in der Auswerteeinheit. Grundsätzlich ist eine direkte Frequenzanalyse dieses Signals nun möglich. Da etablierte Verfahren der digitalen Frequenzanalyse im allgemeinen auf zeitlich äquidistant verteilten Werten des zu untersuchenden Signals aufbauen, schließt sich an die Korrektur der Zeitstempel eine Interpolation der Abtastwerte an.

Dazu wird in einem weiteren, vorteilhaften Verfahrensschritt ein zeitlich äquidistant verteiltes Abtastraster, aufbauend auf der Abtastfrequenz des Analog - Digital - Konverters, definiert. Innerhalb einer darauf aufbauenden Berechnung werden die Amplitudenwerte zu den äquidistant verteilten Abtastzeitpunkten ermittelt. Das dabei zur Anwendung kommende Verfahren interpoliert auf Basis der mit den korrigierten Zeitstempeln versehenden Amplitudenwerte den zum geforderten Zeitpunkt gehörenden Amplitudenwert. In Abhängigkeit von der verfügbaren Berechnungskapazität können für diesen Verfahrensschritt Methoden aus dem Bereich der Zuweisung des nächstgelegenen Nachbars, der linearen Interpolation, der Polynominterpolation, der Spline-Interpolation oder auch andere Interpolationsverfahren verwendet werden. Nach Abschluss der Berechnung beinhaltet das äquidistant verteilte Signal die Abtastwerte, wie sie durch eine Analog - Digital - Wandlung innerhalb eines idealen FMCW - Messgerätes entstehen würden. Die anschließende Frequenzanalyse und Auswertung der Echosignale kann nach bekannten Verfahren entsprechend dem Stand der Technik durchgeführt werden.

In einer weiteren Variation des erfindungsgemäßen Verfahrens werden die nicht äquidistant verteilten Zeitstempel bereits während der Werkskalibrierung errechnet und mit Hilfe einer Konstanten anstelle des ermittelten Verlaufs der Sendefrequenz fest im Speicher abgelegt. Diese Variante eignet sich insbesondere für Sensoren, die eine über der Lebensdauer fest eingestellte Abtastfrequenz besitzen. Vorteilhaft gestaltet sich an dieser Stelle das Wegfallen des Verfahrensschrittes der Zeitstempelkorrektur im Sensor.

Unter der Voraussetzung bereits während der Kalibrierung fest abgelegter Zeitstempel ist es in einer weiteren Variation eines erfindungsgemäßen Sensors möglich, einen Aufbau entsprechend Fig. 8 zu verwenden. Hauptunterschied zu der bislang verwendeten Vorrichtung ist die direkte Ansteuerung 15 des Analog - Digital - Umsetzers 10 durch die Auswerteeinheit 11. Gemäß einer weiteren vorteilhaften Ausgestaltungsvariante werden die Abtastzeitpunkte nicht äquidistant festgesetzt, sondern durch die im Speicher abgelegten, korrigierten Zeitstempel definiert. Das durch diese nicht äquidistante Abtastung in den Speicher eingelesene Signal entspricht unmittelbar dem von einem idealen Sensor eingelesenen Signal und kann ohne weitere Berechnungsschritte den bereits erwähnten Verfahren der Frequenzanalyse und Echoauswertung zugeführt werden. Besondere Vorteile ergeben sich in dieser Ausgestaltungsvariante durch den Wegfall der Interpolation zur Wiederherstellung der Äquidistanz der Abtastwerte.

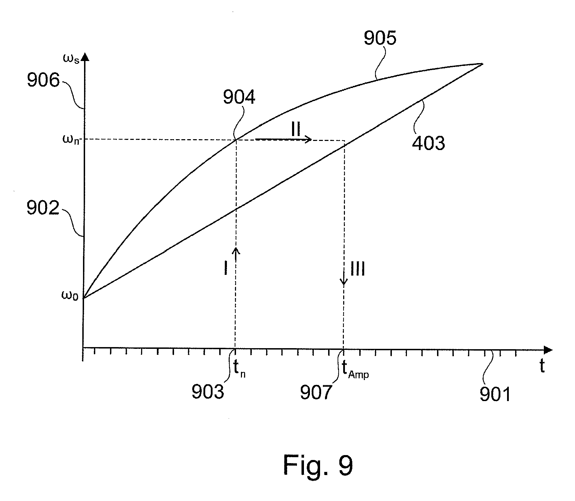

Gemäß einer zweiten Ausgestaltungsvariante der Erfindung werden in einem der Frequenzanalyse vorgelagerten, erfindungsgemäßen Korrekturschritt die in der Auswerteeinheit abgelegten Amplitudenwerte durch nachfolgend beschriebenes Verfahren direkt aus dem im Speicher des Sensors liegenden, nichtidealen Amplitudenwerten extrahiert. Fig. 9 verdeutlicht das dazu verwendete Verfahren, das für jeden der von der Auswerteeinheit benötigten Abtastwerte einzeln durchlaufen wird. Die horizontale Achse 901 entspricht der Zeit, die vertikale Achse 902 entspricht der Frequenz.

Ausgehend von einem Zeitstempel $t_n$ 903, der einen von der Auswerteeinheit benötigten Abtastwert repräsentiert, wird unter Verwendung der im Speicher abgelegten Frequenzkennlinie 905 die zum geforderten Abtastzeitpunkt vorhandene, tatsächlich abgestrahlte Frequenz $\omega_n$ 906 ermittelt. Anschließend wird ausgehend von dieser Frequenz der Zeitpunkt $t_{Amp}$ 907, zu dem die Signalamplitude, die zum benötigten Zeitstempel $t_n$ gehört, tatsächlich vom Analog - Digital - Konverter erfasst wurde, ermittelt. Der Zeitpunkt der Idealamplitude berechnet sich gemäß nachfolgender Formel:

$$t_{Amp} = \frac{\omega_n - \omega_0}{\mu}$$

Abschließend wird das im Speicher abgelegte, nichtideale Signal durchsucht, um den Amplitudenwert zu extrahieren, der zum Zeitpunkt $t_{Amp}$ 907 angelegen hatte. Der ermittelte Amplitudenwert wird an der Stelle des n-ten Abtastwertes im korrigierten Zwischenfrequenzvektor eingetragen.

Im allgemeinen wird die Amplitude zum Zeitpunkt $t_{Amp}$ von keinem der im Speicher abgelegten Zeitstempel - Amplituden - Paare exakt beschrieben. Auf Basis der vorhandenen Zeitstempel und Amplitudenwerte wird daher im allgemeinen mit Hilfe geeigneter Interpolationsverfahren ein Zwischenamplitudenwert für den Zeitpunkt $t_{Amp}$ errechnet. In Abhängigkeit von der verfügbaren Berechnungskapazität können für diesen Schritt Methoden aus dem Bereich der Zuordnung des nächstgelegenen Nachbars, der linearen Interpolation, der Polynominterpolation, der Spline-Interpolation oder anderer Interpolationsverfahren verwendet werden. Nach Abschluss der Korrektur der Amplitudenwerte liegen auch in der beschriebenen, zweiten Ausgestaltungsvariante Amplitudenwerte zur weiteren Auswertung bereit, wie sie beim Einsatz eines idealen FMCW - Messgerätes entstehen würden. Die weitere Auswertung der Signale kann daher nach dem bekannten Stand der Technik durchgeführt werden.

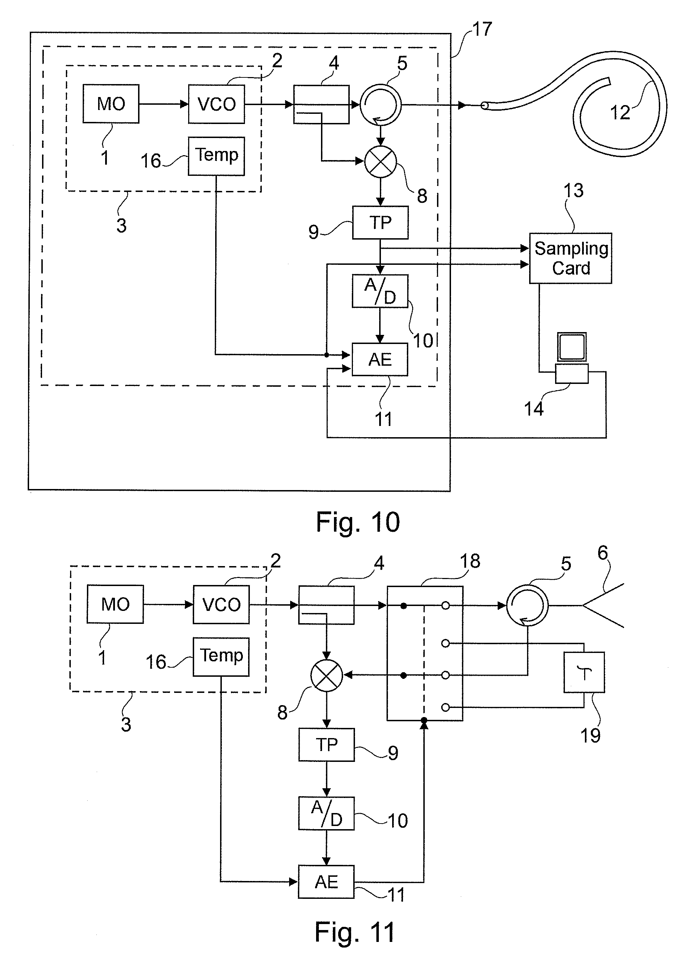

Die in Fig. 10 gezeigte Vorrichtung zur Abstandmessung unterscheidet sich von der Variante in Fig. 1 durch die zusätzliche Einbeziehung eines Temperaturfühlers 16 im Bereich des spannungsgesteuerten Oszillators. Mit dem dargestellten Sensor ist eine erweiterte Kompensation auch der temperaturbeeinflussten Veränderungen der Kennlinie des VCO möglich.

Eine in Verbindung mit der vorgeschlagenen Variante geeignete Kalibriereinrichtung zeigt ebenfalls Fig. 10. Der dargestellte Aufbau gleicht der Kalibriereinrichtung aus Fig. 5, unterscheidet sich jedoch insbesondere dadurch, dass die vom eingebauten Temperatursensor 16 ermittelte VCO - Temperatur vom PC mit Hilfe einer A/D-Wandlerkarte eingelesen wird. Der Sensor selbst befindet sich während dem Kalibriervorgang in einem Temperaturschrank 17, dessen Temperatur ebenfalls von dem externen PC kontrolliert wird. Die Kalibrierung des Sensors selbst erfolgt nun entsprechend den Erläuterungen zu Fig. 5, wird aber für verschiedene, vorab zu definierende Temperaturen durchgeführt. Entsprechend den dargestellten Ausgestaltungsvarianten ist es nun möglich, entweder den Verlauf der abgestrahlten Signalfrequenz für jede Temperatur im Sensor abzuspeichern oder die zu den jeweiligen Temperaturen gehörenden Zeitstempel mit Hilfe einer Konstanten fest im Speicher des Sensors abzulegen.

Während der Betriebsphase des Sensors wird fortlaufend mit Hilfe des in Fig. 10 eingezeichneten Temperatursensors 16 die Temperatur des VCO gemessen und bei der Kompensation der Nichtlinearität berücksichtigt. Für den Fall, dass die gemessene Betriebstemperatur keiner der während der Werkskalibrierung vermessenen Temperaturen entspricht, können je nach Ausgestaltung des Verfahrens entweder der Verlauf der Frequenzkennlinie oder die in den Zeitstempeln abgelegten Zeitwerte durch Verrechnung der Werte benachbarter Temperaturen, für die Kalibrierdaten ermittelt wurden, interpoliert werden.

Selbstverständlich kann das dargestellte Verfahren zur Berücksichtigung der Temperatur auch in Verbindung mit der nicht äquidistanten Abtastung des Zwischenfrequenzsignals gemäß Fig. 8 kombiniert werden.

Eine Erweiterung der erfindungsgemäßen Vorrichtung berücksichtigt neben den bislang dargestellten Nichtlinearitätsursachen zusätzlich den Effekt der Alterung der verwendeten Bauteile. Dazu wird eine Vorrichtung gemäß Fig. 11 verwendet. Ausgehend von einer nach beschriebener Vorgehensweise optional durchzuführenden Vorabkalibrierung im Werk ist es mit der modifizierten Vorrichtung möglich, die Frequenzcharakteristik der Signalquelle während der Laufzeit des Sensors in regelmäßigen Intervallen zu erfassen und zu aktualisieren.

Dazu wird das von der Signalquelle erzeugte Hochfrequenzsignal während eines separat durchzuführenden Nachkalibriervorgangs über einen geeigneten Schalter 18 auf eine im Sensor integrierte Referenzstrecke 19 geleitet, die ein definiertes Echo erzeugt. Die Referenzstrecke innerhalb des Sensors kann in Form eines SAW - Bauelementes, einer koaxialen Leitung oder sonstiger Verzögerungselemente realisiert werden. Die ursprünglich in der Kalibriereinrichtung im Werk durchgeführten Schritte zur Ermittlung der abgestrahlten Frequenz über der Zeit müssen während des Kalibrierzyklusses von der im Sensor eingebauten Auswerteeinheit, die um einen geeigneten Kalibrierblock zu erweitern ist, übernommen werden. Das Ergebnis der Kalibrierung wird schließlich im Speicher der Auswerteeinheit abgelegt und in den nachfolgenden Messzyklen zur Korrektur der Nichtlinearität der Signalquelle verwendet.

Die beschriebene Realisierung einer Nachkalibriereinrichtung stellt eine vorteilhafte Ausgestaltung des Verfahrens dar. Selbstverständlich können alle nach dem Stand der Technik verfügbaren Methoden zur Erfassung der abgestrahlten Frequenz über der Zeit in alternativen Implementierungen verwendet werden.

Die beschriebene Nachkalibrierung des Sensors kann nach verschiedenen Gesichtspunkten initiiert werden. Naheliegende Konzeptionen sehen eine Nachkalibrierung nach Ablauf eines vorab fest definierten Zeitintervalls vor, womit die Alterung der Bauelemente entsprechend berücksichtigt werden kann. Weitergehende Alternativen sehen darüber hinaus zeitlich flexible Nachkalibrierzyklen vor, die beispielsweise bei jeder Veränderung der Temperatur des spannungsgesteuerten Oszillators gestartet werden.

In einer alternativen Vorgehensweise ist es des weiteren möglich, auf die Erfassung des Verlaufs der abgestrahlten Frequenz innerhalb eines werkseitigen Abgleichs zu verzichten, und diese Aufgabe bei der Inbetriebnahme des Sensors während der Initialisierung unter Verwendung einer der beschriebenen Nachkalibriereinrichtungen durchzuführen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

**Patentansprüche**

1. Füllstandmessgerät, das nach dem FMCW-Prinzip arbeitet, wobei das Füllstandmessgerät aufweist:

    eine Speichereinheit zum Speichern eines während einer ersten Referenzphase des Füllstandmessgeräts bestimmten ersten Referenz-Zusammenhangs zwischen einer vom Füllstandmessgerät abgestrahlten Frequenz und der Abstrahlzeit;
    eine Auswerteeinheit zum Bestimmen eines während einer Betriebsphase des Füllstandmessgeräts bestimmten Zusammenhangs zwischen Amplitudenwerten eines Zwischenfrequenz-Signals und der Abstrahlzeit;
    eine Korrektureinheit zur rechnerischen Korrektur der Amplitudenwerte oder zur Berechnung von Abtastzeitpunkten der Amplitudenwerte auf Basis des ersten Referenz-Zusammenhangs.

2. Füllstandmessgerät nach Anspruch 1,
    wobei die rechnerisch korrigierten Amplitudenwerte den theoretischen Amplitudenwerten eines idealen Füllstandmessgeräts entsprechen.

3. Füllstandmessgerät nach Anspruch 1 oder 2,
    wobei die rechnerische Korrektur der Amplitudenwerte eine Interpolation umfasst.

4. Füllstandmessgerät nach einem der vorhergehenden Ansprüche,
    wobei die tatsächlich vorhandenen Amplitudenwerte zu äquidistanten Zeitpunkten bestimmt werden.

5. Füllstandmessgerät nach einem der vorhergehenden Ansprüche,
    wobei die rechnerische Korrektur eine Zuordnung tatsächlich vorhandener Amplitudenwerte zu vorab definierten, vorgegebenen Abtastzeitpunkten umfasst

6. Füllstandmessgerät nach Anspruch 5,
   wobei benötigte, nicht vorhandene Abtastwerte der Amplitude mit Hilfe einer Interpolation gewonnen werden

7. Füllstandmessgerät nach Anspruch 1,
   wobei die berechneten Abtastzeitpunkte während einer Kalibrierungsphase vor der Betriebsphase in der Speichereinheit abgelegt sind.

8. Füllstandmessgerät nach Anspruch 1 oder 7,
   wobei die Amplitudenwerte zu den berechneten, nicht-äquidistanten Abtastzeitpunkten bestimmt werden, so dass sie den theoretischen Amplitudenwerten eines idealen Füllstandmessgeräts mit äquidistanter Abtastung entsprechen.

9. Füllstandmessgerät nach einem der vorhergehenden Ansprüche,
   wobei die Auswerteeinheit einen Analog-Digital-Wandler zum Abtasten der Amplitudenwerte des Zwischenfrequenz-Signals aufweist.

10. Füllstandmessgerät nach einem der vorhergehenden Ansprüche,
    wobei der erste Referenz-Zusammenhang werkseitig durch Vermessung der abgestrahlten Frequenz bestimmt ist.

11. Füllstandmessgerät nach einem der vorhergehenden Ansprüche, weiterhin umfassend:

    eine Auswerteeinheit zur Auswertung eines Zwischenfrequenzspektrums;

    wobei die Auswertung des Zwischenfrequenzspektrums eine Überführung des Zwischenfrequenz-Signals vom Zeitbereich in den Frequenzbereich unter Verwendung einer schnellen Fourier-Transformation beinhaltet.

12. Füllstandmessgerät nach einem der vorhergehenden Ansprüche,
    wobei die Auswerteeinheit zum Bestimmen eines zweiten Referenz-Zusammenhangs zwischen der vom Füllstandmessgerät abgestrahlten Frequenz und der Abstrahlzeit während einer zweiten Referenzphase des Füllstandmessgeräts ausgeführt ist;
    wobei der zweite Referenz-Zusammenhang den ersten Referenz-Zusammenhang im Speicher ersetzt.

13. Füllstandmessgerät nach Anspruch 12,
    wobei der erste Referenz-Zusammenhang und der zweite Referenz-Zusammenhang in einem zeitlich vorbestimmten Abstand voneinander bestimmt werden.

14. Füllstandmessgerät nach Anspruch 12,
    wobei der zweite Referenz-Zusammenhang bei Eintreten eines bestimmten Ereignisses bestimmt wird.

15. Füllstandmessgerät nach einem der vorhergehenden Ansprüche,
    wobei die Speichereinheit zum Speichern eines dritten Referenz-Zusammenhangs zwischen einer vom Füllstandmessgerät abgestrahlten Frequenz und einer Temperatur ausgeführt ist.

16. Füllstandmessgerät nach Anspruch 15, weiterhin umfassend:

    einen Temperaturfühler zum Messen einer zum Sendezeitpunkt vorherrschenden Temperatur eines Oszillators des Füllstandmessgeräts;

    wobei die rechnerische Korrektur oder die Berechnung der Abtastzeitpunkte der Amplitudenwerte auf Basis der vorherrschenden Temperatur des Oszillators und des dritten Referenz-Zusammenhangs erfolgt.

17. Füllstandmessgerät nach einem der vorhergehenden Ansprüche,
    wobei das Füllstandmessgerät als Füllstandradarsystem ausgeführt ist.

18. Verwendung eines Füllstandmessgeräts nach einem der vorhergehenden Ansprüche zur Füllstandmessung.

**19.** Verfahren zum Messen eines Füllstands mit einem Füllstandmessgerät, das Verfahren umfassend die Schritte:

Speichern eines während einer ersten Referenzphase des Füllstandmessgeräts bestimmten ersten Referenz-Zusammenhangs zwischen einer vom Füllstandmessgerät abgestrahlten Frequenz und der Abstrahlzeit;
Bestimmen eines während einer Betriebsphase des Füllstandmessgeräts bestimmten Zusammenhangs zwischen Amplitudenwerten eines Zwischenfrequenz-Signals und der Abstrahlzeit;
rechnerisches Korrigieren der Amplitudenwerte oder Berechnung von Abtastzeitpunkten der Amplitudenwerte auf Basis des ersten Referenz-Zusammenhangs.

**20.** Verfahren nach Anspruch 19, weiterhin umfassend den Schritt:
wobei die Amplitudenwerte zu äquidistanten Zeitpunkten bestimmt werden.

**21.** Verfahren nach Anspruch 19 oder 20, weiterhin umfassend den Schritt:

werkseitiges Bestimmen des ersten Referenz-Zusammenhangs durch Vermessung der abgestrahlten Frequenz.

**22.** Verfahren nach einem der Ansprüche 19 bis 21, weiterhin umfassend den Schritt:

Bestimmen eines zweiten Referenz-Zusammenhangs zwischen der vom Füllstandmessgerät abgestrahlten Frequenz und der Abstrahlzeit während einer zweiten Referenzphase des Füllstandmessgeräts;

wobei der zweite Referenz-Zusammenhang den ersten Referenz-Zusammenhang im Speicher ersetzt.

**23.** Verfahren nach einem der Ansprüche 19 bis 22, weiterhin umfassend den Schritt:

Messen einer zum Sendezeitpunkt vorherrschenden Temperatur eines Oszillators des Füllstandmessgeräts;
Speichern eines dritten Referenz-Zusammenhangs zwischen der vom Füllstandmessgerät abgestrahlten Frequenz und der Temperatur.

wobei die rechnerische Korrektur auf Basis der vorherrschenden Temperatur des Oszillators und des dritten Referenz-Zusammenhangs erfolgt.

Fig. 1a

Fig. 1b

Fig. 2

Fig. 3

Fig. 4

Fig. 5

Fig. 6a

Fig. 6b

Fig. 6c

Fig. 6d

Fig. 7

Fig. 8

Fig. 9

## Fig. 10

## Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19713967
- EP 1353194 A
- EP 0848829 A
- WO 9838525 A